# EUROPEAN PATENT SPECIFICATION

(11) **EP 2 434 689 B1**
(45) Date of publication and mention of the grant of the patent: **17.02.2016**
(21) Application number: 10831147.3
(22) Date of filing: 19.11.2010
(51) Int. Cl.: H04L 12/24, H04L 29/06, H04L 29/08, H04L 12/26

(54) **METHOD AND APPARATUS FOR DETECTING MESSAGE**
VERFAHREN UND VORRICHTUNG ZUR ERKENNUNG VON NACHRICHTEN
PROCÉDÉ ET APPAREIL DE DÉTECTION DE MESSAGE

(30) Priority: 19.11.2009 CN 200910109820
(43) Date of publication of application: 28.03.2012
(73) Proprietor: Huawei Technologies Co., Ltd., Longgang District Shenzhen, Guangdong 518129 (CN)
(72) Inventor: DONG, Lanjun, Shenzhen Guangdong 518129 (CN); SU, Dexian, Shenzhen Guangdong 518129 (CN)
(74) Representative: Isarpatent
(86) International application number: PCT/CN2010/078900
(87) International publication number: WO 2011/060732

(56) References cited:
- EP-A1- 1 798 914
- CN-A- 1 835 500
- CN-A- 1 941 716
- CN-A- 101 202 652
- CN-A- 101 202 652

## Description

### FIELD OF THE INVENTION

The present invention relates to the field of communications technologies, and in particular, to a method and a device for detecting a packet.

### BACKGROUND OF THE INVENTION

Deep Packet Inspection (DPI) is a technology for detecting a packet, which not only detects and analyzes information (data of an IP packet below Layer 4) such as a source Internet Protocol (IP) address (SIP), a destination IP address (DIP), a source port (SPort), a destination port (DPort), and session information in the IP packet, but also analyzes a payload (data at an application layer) in the IP packet in depth, thereby recognizing applications in the network more efficiently.

Currently, the DPI technology is widely applied to fields such as flow control, content charging, and network security. In the application of the DPI technology, protocol recognition in a process for detecting the packet is a key technology. Subsequent analysis and processing both depend on a result of the protocol recognition. The speed, extent, and accuracy of the protocol recognition determine the performance of a DPI apparatus to a large extent.

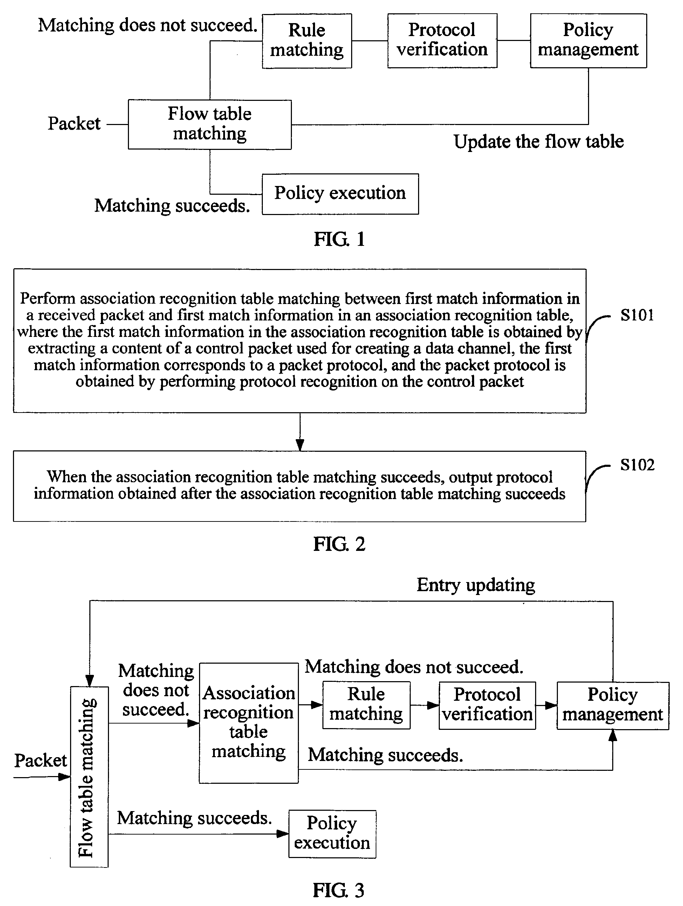

FIG. 1 is a schematic flow chart of protocol recognition in the existing DPI technology. Referring to FIG 1, the protocol recognition includes the following steps.
1) Perform flow table matching on a received packet, and if the matching succeeds, perform policy execution; while if the matching does no succeed, execute step 2.
   In the prior art, the flow table matching is performed for an association protocol (a protocol with a control channel and a data channel separated from each other) or a non-association protocol. Here, the flow table matching refers to matching match information in the received packet with match information stored in the flow table. The match information generally includes information such as a Type, a SIP, a SPort, a DIP, and a DPort. The five pieces of information are called quintuple information. The quintuple information in the flow table determines relevant information in a flow where the packet is located. The relevant information in the flow may include information such as a user identifier (ID), a policy action,
   a statistic type, and a protocol ID. The relevant information in the flow is not limited thereto, but generally includes policy action information. When the flow table matching succeeds, a relevant policy action may be obtained by searching the flow table through the quintuple information, and the policy execution is performed.
2) Perform rule matching on the packet, and output a matching result. If the flow table matching does not succeed, it indicates that no corresponding policy exists. At this time, protocol recognition, policy management, and other steps need to be performed to establish a corresponding relation between the quintuple information and the policy. In the protocol recognition, the rule matching is first performed on the packet. The rule matching refers to matching relevant information extracted from the packet with a rule in a rule base to recognize the packet. During the rule matching, data in the rule base is numerous and a matching algorithm operation is required, so the processing speed is low.
3) Perform protocol verification according to the matching result, and recognize a relevant protocol. In the protocol verification, the result output after the rule matching is verified and analyzed to recognize the relevant protocol.
4) Perform the policy management according to the recognized protocol, and meanwhile update the flow table. After the protocol recognition succeeds, the packet may be sent to a central processing unit (CPU) to perform the policy management, and the relevant information, including the corresponding relation between the quintuple information and the policy, in the flow table is updated. After the flow table is updated, when a packet enters next time, a relevant policy may be indexed to according to the quintuple information in the flow table to perform the policy execution.

During the implementation of the present invention, the inventors find that the prior art at least has the following problem. When the flow table matching does not succeed, the protocol recognition and flow table updating need to be performed through steps such as the rule matching, protocol verification, and policy management. The processing speeds of the steps such as the rule matching and the protocol verification are generally low, so a protocol recognition speed cannot be further increased.

Document EP 1 798 914 A1 discloses systems and methods for communication traffic congestion management which analyze communication traffic to determine its type. A traffic congestion management function is selected based on the determined type and a level of communication traffic congestion. Document CN 101 202 652 A discloses a network application flow classifying recognizing device including a dynamic flow classifying device which builds a hash table and searches a network flow table by making use of the hash table.

### SUMMARY OF THE INVENTION

Embodiments of the present invention provide a method and a device for detecting a packet, so as to increase a protocol recognition speed.

A method for detecting a packet includes:
receiving a packet, and performing flow table matching on the packet;
when the flow table matching does not succeed, performing association recognition table matching on the packet, where the association recognition table matching includes matching on triple information in the packet, and the triple information includes a Type, a SIP, and a SPort, or the triple match information includes a Type, a DIP, and a DPort; and
when the association recognition table matching succeeds, outputting protocol information obtained after the association recognition table matching succeeds.

A method for detecting a packet includes:
performing association recognition table matching between first match information in a received packet and first match information in an association recognition table, where the first match information in the association recognition table is obtained by extracting a content of a control packet used for creating a data channel, the first match information corresponds to a packet protocol, and the packet protocol is obtained by performing protocol recognition on the control packet; and
when the association recognition table matching succeeds, outputting protocol information obtained after the association recognition table matching succeeds.

An association protocol recognition device includes:
a receiving unit, adapted to receive a packet; and
an association recognition table matching unit, adapted to perform association recognition table matching between first match information in the packet received by the receiving unit and first match information in an association recognition table, where the first match information in the association recognition table is obtained by extracting a content of a control packet used for creating a data channel, the first match information corresponds to a packet protocol, and the packet protocol is obtained by performing protocol recognition on the control packet; and when the association recognition table matching succeeds, output protocol information obtained after the association recognition table matching succeeds.

In the embodiments of the present invention, when match information in the association recognition table is matched, since the match information in the association recognition table is obtained by extracting the content of the control packet used for creating the data channel and corresponds to the protocol obtained by performing the protocol recognition on the control packet, the protocol is recognized without detecting the packet content, thereby increasing a protocol recognition speed.

### BRIEF DESCRIPTION OF THE DRAWINGS

To make the technical solutions of the present invention clearer, the accompanying drawings for illustrating the embodiments of the present invention or the prior art are given briefly below. Apparently, the accompanying drawings described below are only about some embodiments of the present invention, and persons of ordinary skill in the art can derive other drawings from the accompanying drawings without creative efforts.
FIG 1 is a schematic diagram of protocol recognition in the prior art;
FIG. 2 is a flow chart of a method according to Embodiment 2 of the present invention;
FIG. 3 is a schematic diagram of protocol recognition according to Embodiment 3 of the present invention;
FIG. 4 is a flow chart of a method according to Embodiment 3 of the present invention;
FIG. 4A is a flow chart of creating and configuring a flow table and an association recognition table according to Embodiment 3 of the present invention;
FIG 5A is a schematic diagram of creating a data channel through a control channel according to Embodiment 3 of the present invention;
FIG. 5B is another schematic diagram of creating the data channel through the control channel according to Embodiment 3 of the present invention;
FIG. 6 is a schematic diagram of deleting the flow table according to Embodiment 3 of the present invention;
FIG 7 is a schematic diagram of aging the control channel according to Embodiment 3 of the present invention;
FIG 8 is a schematic diagram of aging the data channel according to Embodiment 3 of the present invention;
FIG. 9 is a schematic diagram of protocol recognition according to Embodiment 4 of the present invention; and
FIG. 10 is a schematic structure diagram of a device according to Embodiment 5 of the present invention.

### DETAILED DESCRIPTION OF THE EMBODIMENTS

For better understanding of the objectives, technical solutions, and advantages of the present invention, the present invention is hereinafter described in detail with reference to specific embodiments and the accompanying drawings.

### Embodiment 1

Embodiment 1 of the present invention provides a method for detecting a packet. The method includes the following steps:
receiving a packet, and performing flow table matching on the packet;
when the flow table matching does not succeed, performing association recognition table matching on the packet, where the association recognition table matching includes matching on triple information in the packet, and the triple information includes a Type, a SIP, and a SPort, or the triple information includes a Type, a DIP, and a DPort; and
when the association recognition table matching succeeds, outputting protocol information obtained after the association recognition table matching succeeds.

The association recognition table matching includes matching the triple information of the packet with triple information in an association recognition table, where the triple information in the association recognition table is obtained by extracting a content of a control packet used for creating a data channel, the triple information in the association recognition table corresponds to a packet protocol, and the packet protocol is obtained by performing protocol recognition on the control packet.

In the embodiment of the present invention, when the association recognition table matching performed on the packet does not succeed, the protocol recognition is performed on the packet. The protocol recognition includes rule matching and protocol verification.

Moreover, when the flow table matching succeeds, a corresponding policy is performed on the successfully matched packet.

In the embodiment of the present invention, the flow table matching mainly includes matching quintuple information in the packet with quintuple information in a flow table. The quintuple information may include a Type, a SIP, a SPort, a DIP, and a DPort. The quintuple information is mainly used to determine a flow. Index searching is performed on the flow table through the quintuple information. If other information can also be used to complete the corresponding function, the quintuple information may be replaced with the other information.

In the embodiment of the present invention, the flow table and the association recognition table may be two different tables or the same table (for example, both are located in the flow table). When the flow table and the association recognition table are located in two tables, a full matching method may be used to perform matching on the flow table and the association recognition table respectively. When the flow table and the association recognition table are located in the same table, a longest matching method may be used to implement matching for the flow table and the association recognition table successively.

In the embodiment of the present invention, when the flow table matching does not succeed, the association recognition table matching is performed to directly recognize the protocol without a protocol recognition process, thereby increasing a protocol recognition speed.

### Embodiment 2

As shown in FIG. 2, Embodiment 2 of the present invention provides a method for detecting a packet, so as to increase a protocol recognition speed. The method includes the following steps.

S101: Perform association recognition table matching between first match information in a received packet and first match information in an association recognition table, where the first match information in the association recognition table is obtained by extracting a content of a control packet used for creating a data channel, the first match information corresponds to a packet protocol, and the packet protocol is obtained by performing protocol recognition on the control packet.

The first match information includes a Type, a SIP, and a SPort, or the first match information includes a Type, a DIP, and a DPort. It should be noted that, the first match information comes from a packet of a protocol (for example, most of peer-to-peer (P2P) protocols) with a control channel and a data channel separated from each other. In these protocols, data can be transmitted only after the data channel is created through the control channel. When the control packet creates the data channel, the first match information may be extracted. The first match information corresponds to protocol information obtained by performing the protocol recognition on the control packet. At this time, if the association recognition table matching succeeds, the protocol may be directly recognized without steps of rule matching and protocol verification.

For example, when a File Transfer Protocol (FTP) (one of association protocols) is adopted for data transmission, a client first establishes a control connection with a port 21 of a server to create a control channel, and then sends a data channel establishment command through the control channel. The specific command varies according to different protocols, but a corresponding command generally includes triple information. For example, when the FTP protocol is adopted to create a data channel, a PORT command sent from the client includes corresponding port information for data connection. At this time, the triple information in the relevant control packet (for example, the PORT command) may be extracted as the first match information.

In the embodiment of the present invention, before the association recognition table matching, flow table matching is first performed on the received packet, where the flow table matching includes matching second match information in the packet with second match information in the flow table. The second match information is used to search for relevant information, including an execution policy corresponding to the packet, in a flow corresponding to the packet. In the embodiment of the present invention, the second match information is the Type, the SIP, the SPort, the DIP, and the DPort. Generally, the five pieces of information can determine the relevant information of the flow where the packet is located, and the relevant information includes information such as a user ID, a policy action, a statistic type (for example, traffic statistics or packet size statistics), a flow ID (for indicating a corresponding flow), and a protocol ID.

It should be noted that, information in the flow determined by a quintuple is not limited, but generally includes policy action information, so that after the quintuple matching succeeds, the policy action corresponding to the packet can be found through the quintuple to execute the corresponding policy. At the same time, the second match information is also not limited to the five entries: the Type, the SIP, the SPort, the DIP, and the DPort. If the flow can be determined by adding more recognition information or the flow can be determined through less than five pieces of information, a content of the second match information may also be increased or decreased accordingly.

In the embodiment of the present invention, the flow table and the association recognition table may be implemented through a Hash table or a ternary content addressable memory (TCAM) table or in other forms of tables. At the same time, the flow table and the association recognition table may be located in different matching tables, that is, two different tables are adopted to store data in the flow table and the association recognition table respectively. The flow table and the association recognition table may also be located in the same matching table, that is, the same table is adopted to store data in the flow table and the association recognition table. When the flow table and the association recognition table are located in different matching tables, a full matching method may be adopted to perform the flow table matching and the association recognition table matching. When the flow table and the association recognition table are located in the same table, a longest matching method may be adopted to perform the flow table matching and the association recognition table matching.

In the embodiment of the present invention, the flow table and the association recognition table are configured according to a type of the received packet (for example, a packet of a general protocol, a control packet of an association protocol, or a data packet of an association protocol), which includes updating the second match information in the flow table or the first match information in the association recognition table.

S102: When the association recognition table matching succeeds, output the protocol information obtained after the association recognition table matching succeeds.

The output protocol information is information obtained after the matching succeeds. Actions such as dropping, passing, and marking may be performed on the relevant packet by carrying out policy management on the protocol and updating the flow table. Here, the policy corresponds to the protocol.

If the association recognition table matching does not succeed, steps of the rule matching and the protocol verification are performed on the packet, which is similar to the prior art. Through these steps, the protocol may be recognized, but a speed of these steps is much lower than that of the association recognition table matching.

In the embodiment of the present invention, when the flow table matching succeeds, policy execution is directly performed according to a matching result.

In the embodiment of the present invention, aging processing may also be performed on the flow table and the association recognition table. If it is monitored that no packet enters the data channel or the control channel within a period of time, relevant information in the flow table and/or relevant information in the association recognition table is deleted.

In the embodiment of the present invention, when the control packet of the association protocol creates the data channel through the control channel, the first match information in the packet is extracted, and the first match information corresponds to the protocol information obtained by performing the protocol recognition on the control packet, so that as long as the association recognition table matching succeeds, the protocol recognition can be completed without the steps of the rule matching and the protocol verification, thereby increasing the protocol recognition speed.

### Embodiment 3

Embodiment 3 of the present invention provides a method for detecting a packet, so as to increase a protocol recognition speed. FIG. 3 is a schematic flow chart according to an embodiment of the present invention. When a packet is received, flow table matching is first performed. If the flow table matching succeeds, policy execution is performed.

In the embodiment of the present invention, when the flow table matching does not succeed, rule matching is not performed, but association recognition table matching is performed. Triple information and a protocol ID corresponding to the triple information are stored in an association recognition table, where the triple information is obtained when a data channel is created through a control channel of an association protocol, and the protocol ID corresponding to the triple information is obtained by performing protocol recognition on a control packet. If the triple information matching succeeds, policy management is performed directly according to the obtained protocol; and if the triple information matching does not succeed, the protocol recognition is performed by carrying out steps of the rule matching and protocol verification.

The association protocol refers to a protocol with the control channel and the data channel separated from each other. In the embodiment of the present invention, the triple information is extracted in a process that the data channel is created through the control channel of the association protocol. The triple information corresponds to the protocol obtained by recognizing the control packet of the association protocol. Therefore, only the triple information needs to be matched at this time. If the triple information matching succeeds, the protocol may be recognized, so as to perform the policy management according to the recognized protocol. In this way, recognition steps such as the rule matching and the protocol verification may be omitted, thereby increasing the protocol recognition speed to a large extent.

It should be noted that, the flow table matching refers to matching match information in the packet with match information in a flow table. The match information in the flow table can determine relevant information, including information such as a user ID, a policy action, a statistic type, a flow ID, and a protocol ID, in a flow where the packet is located. Here, it should also be noted that, information in the flow determined by a quintuple is not limited, but generally includes policy action information, so that when the quintuple matching succeeds, the policy action corresponding to the packet can be found through the quintuple to execute the corresponding policy.

In the embodiment of the present invention, five pieces of information (the quintuple) such as a Type, a SIP, a SPort, a DIP, and a DPort are regarded as the match information. If, for some protocol, other information is further required to perform matching or less than five pieces of information is required to perform the matching, the match information can be adjusted according to specific situations. In a similar way, the match information in the association recognition table is also not limited.

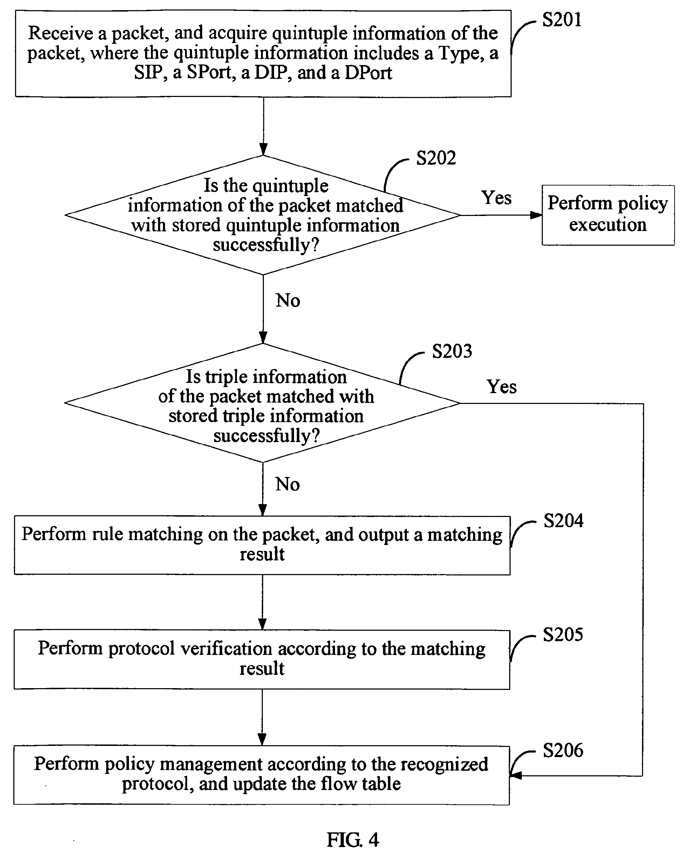

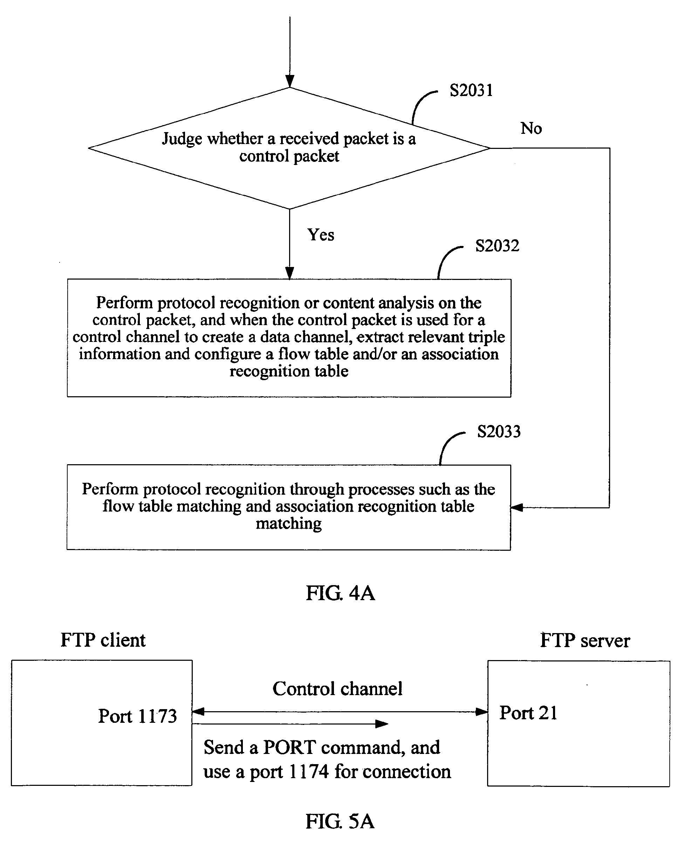

The embodiment of the present invention is described in detail in the following by taking the match information in the flow table being the quintuple information and the information in the association recognition table being the triple information as an example. Referring to FIG. 4, the following steps are specifically included.

S201: Receive a packet, and acquire quintuple information of the packet, where the quintuple information includes a Type, a SIP, a SPort, a DIP, and a DPort.

Here, the packet refers to a packet required to be recognized, including a packet of an association protocol with a control channel and a data channel separated from each other. The association protocol is a widely applied protocol. For example, in the field of the P2P application, many protocols are the association protocols, and the P2P occupies a large proportion (higher than 90% during the evening peak hours) of network traffic. At the same time, common protocols such as an FTP and a Session Initiation Protocol (SIP) are also the association protocols. Therefore, if the speed for recognizing the association protocol can be increased, the speed of the whole protocol recognition process is also increased accordingly.

A packet of the association protocol, no matter a packet of the control channel (a control packet) or a packet of the data channel (a data packet), needs to be received and subsequently recognized.

In the quintuple information, the Type indicates that the packet is transmitted based on a Transmission Control Protocol (TCP) or a User Datagram Protocol (UDP); the SIP represents an IP address of a user sending the packet, and the SPort represents a port number of a user sending the packet; and the DIP represents an IP address of a user receiving the packet, and the DPort represents a port number of a user receiving the packet.

The quintuple information is equal to a piece of index information in a flow table, and information such as a user ID, a policy action, a statistic type, a flow ID, and a protocol ID, in the flow table may be searched for through the quintuple information. It should be noted that, the information in the flow table is not unique, and corresponding information may be added or deleted according to actual application situations, but the information generally includes the policy action. When the matching succeeds, a corresponding policy can be found through the quintuple information to perform policy execution.

S202: Match the quintuple information of the packet with stored quintuple information to judge whether the matching succeeds; and if the matching succeeds, the policy execution is performed; while if the matching does not succeed, step S203 is executed.

The matching is performed on the quintuple information in the flow table. In addition to the quintuple information, information stored in the flow table may include information such as the user ID, the flow ID, the policy action (for example, dropping, passing, and uploading a packet to a CPU), and the statistic type. The quintuple information in the flow table is equal to a piece of index information, and information such as the user ID, the flow ID, and the policy action may be indexed to through the quintuple information. If the quintuple information matching succeeds, it indicates that the policy action corresponding to the quintuple information already exists in the flow table, and the policy action can be found through the quintuple information, and then a policy is executed. If the quintuple information matching does not succeed, it indicates that no policy corresponding to the quintuple information exists, and subsequent steps need to be executed.

S203: Match triple information of the packet with stored triple information; and if the matching succeeds, step S206 is executed to perform policy management on a successfully matched protocol; while if the matching does not succeed, step S204 is executed.

The triple information includes three pieces of information, namely, a Type, a SIP, and a SPort, or includes three pieces of information, namely, a Type, a DIP, and a DPort. A source node and a destination node are relative (for example, for the same action that a client sends a message to a server, either the client or the server may be regarded as the source node), so that the triple information may be represented by either the Type, the SIP, and the SPort or the Type, the DIP, and the DPort.

In the embodiment of the present invention, the triple information matching is performed in an association recognition table. The triple information and a protocol recognized by performing protocol recognition on a control channel packet are recorded in the association recognition table. In the embodiment of the present invention, the protocol is represented by using the protocol ID. In another embodiment, the protocol may be represented in other manners. Each piece of triple information in the association recognition table corresponds to one protocol. If the triple matching succeeds, it indicates that the protocol is recognized, and step 206 is subsequently executed to perform the policy management on the successfully matched protocol.

In a matching process, if definitions of the source node and the destination node and whether the stored triple information is the Type, the SIP, and the SPort or the Type, the DIP, and the DPort are learned in advance, the triple information in the packet can be directly matched; and if the definitions and whether the stored triple information is the Type, the SIP, and the SPort or the Type, the DIP, and the DPort are not learned in advance, triple matching of the association recognition table may be performed on the Type, the SIP, and the SPort (or the Type, the DIP, and the DPort) in the packet, and if the matching does not succeed, the Type, the DIP, and the DPort (or the Type, the SIP, and the SPort) are used to perform matching.

S204: Perform rule matching on the packet, and output a matching result.

When the flow table matching does not succeed, the protocol recognition is performed, which includes steps of the rule matching and the protocol verification. Rule matching is performed by matching feature information extracted from the received packet with an expression of a rule base. If the matching succeeds, the matching result is output. The matching is generally completed through a DPI acceleration chip, thereby increasing the matching speed. If the matching does not succeed, the information may be submitted to the CPU to perform the protocol recognition through software. In the rule matching, the feature information of the packet is matched with the expression in the rule base, the rule base is generally large, and a matching algorithm operation is required in the matching. Therefore, compared with simple matching performed on the quintuple or the triple in the flow table or the association recognition table, a lot of time often needs to be spent in the rule matching. Especially, when the rule matching is processed by the software, the processing efficiency is lower than that of hardware implementation.

S205: Perform protocol verification according to the matching result.

The result output after the rule matching is verified and analyzed to judge, according to a verification result, whether the recognition is completed. If the recognition is completed, the protocol ID representing the protocol is output.

S206: Perform the policy management according to the protocol recognized after the rule matching and the protocol verification, and update the flow table.

After the protocol verification is performed, the policy corresponding to the protocol is determined to perform the policy management, and the protocol and the policy corresponding to the protocol are updated into the flow table. After the flow table is updated, if a packet matches the quintuple next time, the protocol corresponding to the packet and an execution policy corresponding to the protocol can be directly recognized.

In the embodiment of the present invention, in a process of the triple matching of the association recognition table, the triple information in the association recognition table is obtained by extracting the content of the control packet when the control packet creates the data channel. The triple information corresponds to the recognized protocol obtained by performing the protocol recognition on the control packet. In order to make the solution clearer and more complete, a process for creating the triple information and configuration of the flow table and the association recognition table are described in detail in the following. Referring to FIG. 4A, the following steps are specifically included.

S2031: Receive a packet and judge a packet type; and if the packet is a control packet, step S2032 is executed; otherwise, step S2033 is executed to recognize a protocol through processes such as quintuple matching and triple matching.

The step of judging the packet type is before flow table matching. Since a control channel and a data channel of an association protocol are separated from each other, when a packet of the association protocol arrives, the control channel first needs to be created. The control channel does not transmit user data, but is used to establish a control connection of the protocol. The data channel is subsequently created to transmit the user data. Generally, when the control channel is created, a client is connected to a certain port of a server to create the control channel. For example, when a control channel of the FTP protocol is created, the client is connected to a port 21 of the server.

For the control packet related to the control channel, step S2032 is executed. Otherwise, if the packet is judged as a data packet of the association protocol or a packet of a non-association protocol, step S2033 is executed to perform processes such as the flow table matching and association recognition table matching. For details, reference may be made to a process shown in FIG. 4.

S2032: Perform protocol recognition or content analysis on the control packet, and when the control packet is used for the control channel to create the data channel, extract relevant triple information and configure a flow table and/or an association recognition table.

The control channel and the data channel of the association protocol are separated from each other. The control channel does not transmit the user data, but is used to establish the control connection of the protocol. The data channel is subsequently created to transmit the user data. Generally, when the control channel is created, the client is connected to a certain port of the server to create the control channel. For example, when the control channel of the

FTP protocol is created, the client is connected to the port 21 of the server.

When the received packet is judged as the control packet, the flow table matching is first performed. If the matching does not succeed, the protocol recognition is performed through steps of rule matching and protocol verification (for details, reference may be made to steps such as step S204 and step S205). After the protocol recognition, policy management is performed on the recognized protocol, and a policy management result is updated into the flow table. By now, one more entry is added in the flow table, where the entry records quintuple information and a corresponding policy action (or other information such as a protocol ID and a flow ID). When a packet including the same quintuple information arrives next time, the corresponding policy action may be found by matching the quintuple information in the flow table, and the policy is performed.

A first packet of the protocol is received for the first time, so the protocol recognition is generally performed through steps such as the rule matching and the protocol verification. When the control packet of the protocol is not the first packet, a content of the packet may be analyzed (the analysis includes actions such as quintuple information extraction and subsequent flow table matching), and corresponding steps, for example, steps such as flow table matching, are executed according to the content of the packet.

The specific process of creating the data channel and the configuration process of the flow table and the association recognition table are described in detail in the following by taking the FTP protocol as an example.

The FTP protocol supports two connection modes: a Standard mode (also called a PORT mode or an active mode) and a Passive mode (also called a PASV mode or a passive mode). In the Standard mode, an FTP client sends a PORT command to an FTP server to notify the server of a port used by the client during data connection. In the Passive mode, the FTP client sends a PASV command to the FTP server, and the server notifies the client of a port used by the server during the data connection according to the PASV command, so as to enable the client to be connected to the port.

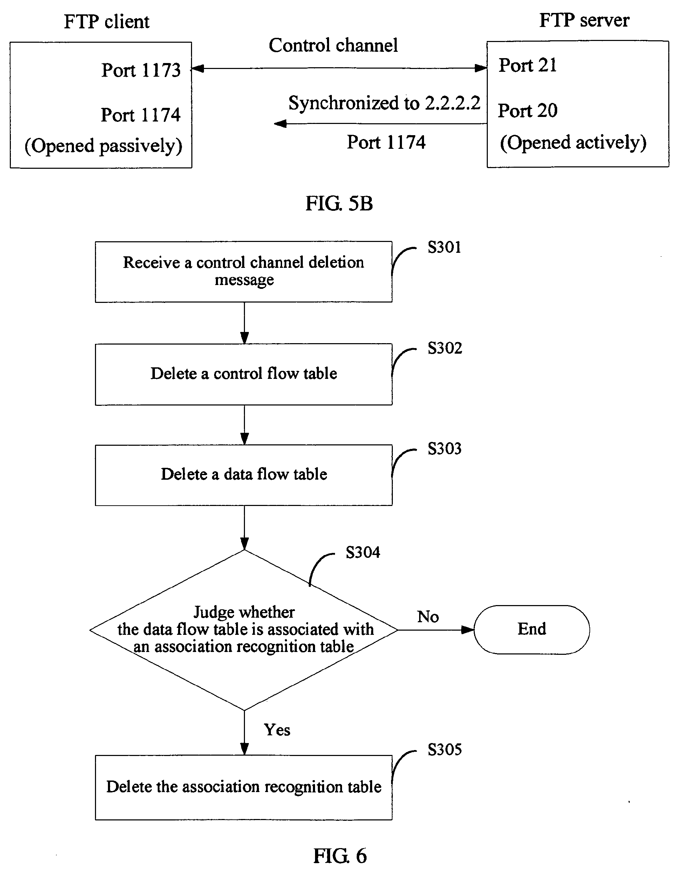

The process for creating the data channel is described in detail in the following by taking the PORT mode for connection as an example. Referring to FIG 5A and FIG 5B, it is assumed that an IP of a client is 2.2.2.2 and an IP of a server is 1.1.1.1. The process includes the following steps.

### 1) Create a control channel, and configure a control flow table and a data flow table.

Referring to FIG 5A, firstly, the client uses a port of the client (for example, a port 1173) to establish a connection with a port 21 of an FTP server through a TCP protocol, so as to create a control channel; and meanwhile, configures the control flow table and the data flow table. Here, the control flow table and the data flow table are both a part of a flow table. An entry in the control flow table is directed to a control packet, and an entry in the data flow table is directed to a data packet.

At this time, quintuple information in the control flow table is as follows:
SPort: 1173; SIP: 2.2.2.2; DPort: 21; DIP: 1.1.1.1; and Type: TCP. Quintuple information in the data flow table is as follows:
SPort: X; SIP: X; DPort: X; DIP: 1.1.1.1; and Type: TCP (the letter X indicates that the information is unknown, similarly hereinafter); and at this time, the data flow table is a temporary data flow table with incomplete information.

### 2) Acquire triple information through a PORT command sent by the client, and configure an association recognition table.

After the control channel is created, the client sends the PORT command to the server to establish a data connection and create a data channel. The PORT command includes a port (for example, 1174) of the client, and the server may be connected to the client through the port.

At this time, the association recognition table may be configured according to the PORT command. The triple information in the association recognition table is:
SPort: 1174; SIP: 2.2.2.2; and Type: TCP.

In addition to the triple information, the association recognition table may include a protocol ID (for indicating a protocol) corresponding to the triple information. The protocol ID may be obtained by performing the protocol recognition on the control packet in step S2032 (it is assumed that the protocol recognition is already performed on the control packet and the protocol ID corresponding to the quintuple is extracted). It should be noted herein that, the SPort and the SIP are obtained in the case that the client is a source node and the server is a destination node. If the server is regarded as the source node and the client is regarded as the destination node, the triple information should be: DPort: 1174, DIP: 2.2.2.2, and Type: TCP. Therefore, the SPort and the SIP, or the DPort and the DIP may be selected according to specific situations.

Meanwhile, the quintuple information in the data flow table may be updated with the following information:
SPort: 1174; SIP: 2.2.2.2; DPort: X; DIP: 1.1.1.1; and Type: TCP; and at this time, the quintuple information in the data flow table is still incomplete (lacking the DPort).

### 3) The server sends an SNY packet to create the data channel.

Referring to FIG. 5B, after receiving the PORT command, the server actively opens a port 20 to send the SYN packet to the port 1174 of the client for TCP negotiation to create the data channel. At this time, the quintuple information in the data flow table may be determined as: SPort: 1174; SIP: 2.2.2.2; DPort: 20; DIP: 1.1.1.1; and Type: TCP. It should be noted herein that, in an actual network, a situation that the TCP negotiation succeeds but an actual data channel is not successfully created may exist (in this case, the TCP negotiation needs to be performed again), so that only when the sent data packet is received by an actual receiver, it indicates that the data channel is actually created. Therefore, the quintuple information extracted in an SYN packet negotiation process at this time cannot be placed in the flow table, but the triple information in the process of creating the data channel is certain (the TCP negotiation is performed after the execution of the PORT command and does not influence the extracted triple information) and may be saved in the association recognition table.

The foregoing process is a process of establishing FTP connection through the Standard mode. The working manner used when the Passive mode or other protocols are adopted is similar to that of the foregoing process. In the two manners, the IP, port, and Type information that are required by the association recognition table may be extracted by relevant commands made when the data channel is created.

It should also be noted herein that, the foregoing example is only a specific embodiment of the present invention. In other implementation, the flow table and the association recognition table may be configured according to different protocols and actual application situations, and the configuration is not limited to the scenario of the foregoing embodiment.

Optionally, when the association recognition table is configured, an association flag bit may also be set to indicate whether an association recognition table associated with a data flow table exists. If the association recognition table associated with the data flow table exists, the flag bit may be set to 1; and if the association recognition table associated with the data flow table does not exist, the flag bit may be set to 0. The association flag bit is set to conveniently check whether the association recognition table associated with the data flow table exists, so as to make the subsequent operation (for example, deletion of the association recognition table) simpler and more convenient.

In an embodiment of the present invention, if an association recognition protocol does not need to be recognized, a control channel may be deleted, and meanwhile a relevant flow table and association recognition table are also deleted. Referring to FIG. 6, the following steps may be specifically included.

S301: Receive a control channel deletion message.

S302: Delete a control flow table.

S303: Delete a data flow table.

S304: Judge whether the data flow table is associated with an association recognition table; and if the data flow table is associated with the association recognition table, turn to step S305; while if the data flow table is not associated with the association recognition table, end the process.

Here, the judging whether the data flow table is associated with the association recognition table may be performed by judging the association flag bit described above. The association flag bit is established when the association recognition table is created. If the association recognition table associated with the data flow table exists, a value of the association flag bit is 1; and if the association recognition table associated with the data flow table does not exist, the value of the association flag bit is 0.

S305: Delete the association recognition table.

By now, the association recognition table is deleted.

It should be noted that, in a process of deleting a flow table, the foregoing steps are a logic implementation process. During specific operation, the association recognition table may be first deleted, then the data flow table is deleted, and finally the control flow table is deleted. When aging of the control channel or aging of the data channel is performed, a similar method may also be adopted.

In an embodiment of the present invention, aging processing, including aging of a control channel and aging of a data channel, may also be performed on a flow table and an association recognition table.

The aging of the control channel refers to: when it is detected that no packet enters a certain control channel within a period of time, a control flow table corresponding to a control flow is deleted, and meanwhile, a data flow table corresponding to the control channel is also deleted; and if the data flow table is associated with an association recognition table, the association recognition table is also deleted.

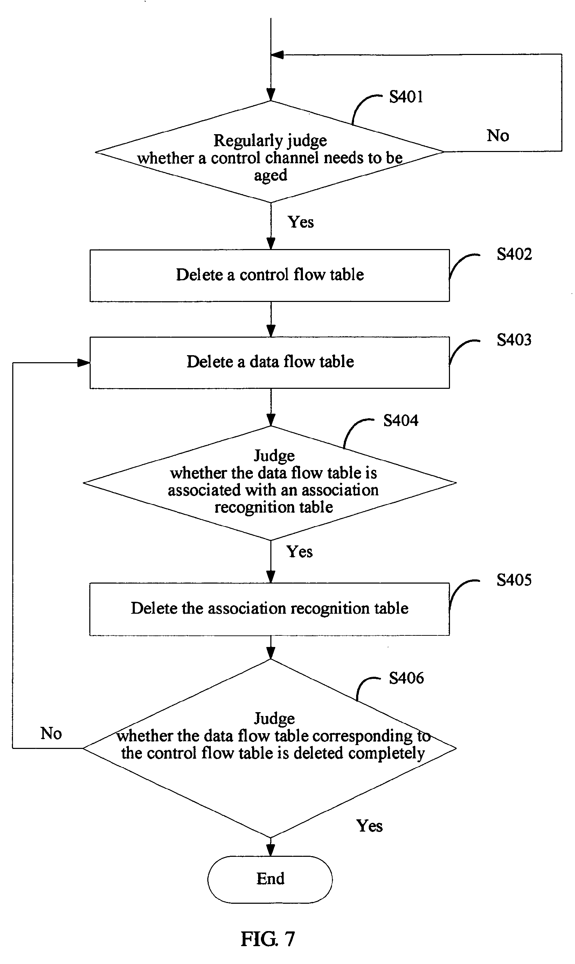

Referring to FIG. 7, aging of a control channel may specifically include the following steps.

S401: Regularly judge whether the control channel needs to be aged; and if the control channel needs to be aged, turn to step S402; while if the control channel does not need to be aged, continue to judge whether the control channel needs to be aged.

It is judged every a certain time interval whether the control channel needs to be aged. If it is judged that no packet of a certain control flow enters the control channel, it indicates that the aging is needed.

S402: Delete a control flow table.

S403: Delete a data flow table.

S404: Judge whether the data flow table is associated with an association recognition table; and if the data flow table is associated with the association recognition table, execute step S405; while if the data flow table is not associated with the association recognition table, execute step S406.

S405: Delete the association recognition table.

S406: Judge whether the data flow table corresponding to the control flow table is deleted completely; and if the data flow table corresponding to the control flow table is deleted completely, end the process; while if the data flow table corresponding to the control flow table is not deleted completely, turn to step S403.

By now, an aging process of the control channel is completed.

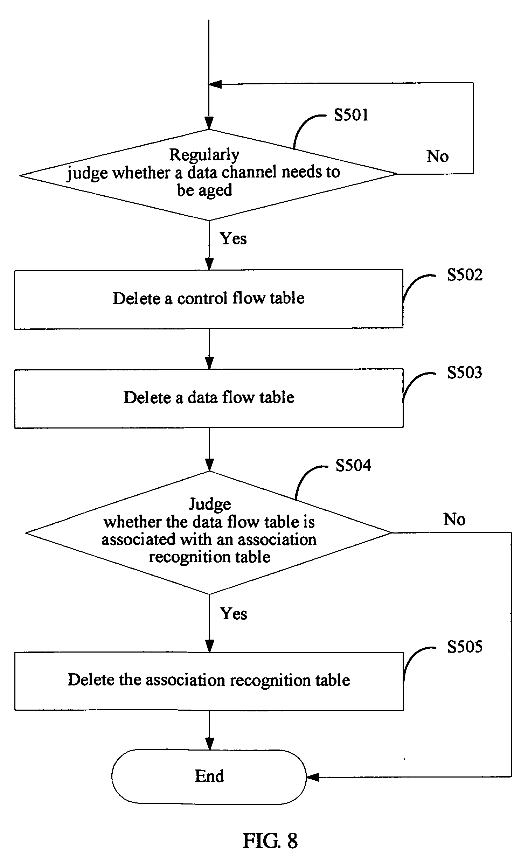

Referring to FIG 8, aging of a control channel may specifically include the following steps.

S501: Regularly judge whether the data channel needs to be aged; and if the data channel needs to be aged, turn to step S502; while if the data channel does not need to be aged, continue to judge whether the data channel needs to be aged.

S502: Delete a control flow table.

S503: Delete a data flow table.

S504: Judge whether the data flow table is associated with an association recognition table; and if the data flow table is associated with the association recognition table, execute step S505; while if the data flow table is not associated with the association recognition table, end the process.

S505: Delete the association recognition table.

By now, an aging process of the data channel is completed.

It should be noted herein that, in the aging processes of the control channel and the data channel, the judging whether the data flow table is associated with the association recognition table may be performed by judging an association flag bit. For a specific judging method, reference may be made to the foregoing description, and the details will not be repeated herein.

In the embodiment of the present invention, the flow table matching and the association recognition table matching (quintuple and triple information matching) may be completed through a dedicated hardware processing unit, such as a net processor (NP), a field programmable gate array (FPGA), or an application specific integrated circuit (ASIC). The dedicated hardware processing unit has a fast processing speed and adopts a full matching method. When the association protocol recognition needs to be performed on the data packet, if the prior art is adopted, and the quintuple information in the flow table is not matched successfully, the two steps of rule matching and protocol verification need to be performed, so that the processing speed is reduced due to the number of rules in the rule base and the matching algorithm operation; while when the method in the embodiment of the present invention is adopted, if the quintuple information in the flow table is not matched successfully, the matching of the triple information of the association recognition table is performed, and if the triple information of the association recognition table is matched successfully, the policy management is directly performed without the rule matching and the protocol verification for recognizing the protocol. When a large amount of data needs to be matched and recognized, the flow table matching and the association recognition table matching are both performed by hardware, thereby greatly increasing the processing speed and improving the processing efficiency.

Another benefit of the embodiment of the present invention is that, if the protocol can be recognized through the association recognition table, the rule matching and the protocol verification processing modules are not needed. In the rule matching, a lot of rules need to be used, so a lot of space is needed to store the rules. In the embodiment of the present invention, the rule matching is not needed, so the space for storing the rules can be saved in the matching acceleration process.

Moreover, when a data packet having a encrypted content (for example, Layer 7 information of an IP packet) arrives (the triple information can still be detected), the triple information in the data packet and the protocol ID are already established when the data channel is created, so the corresponding protocol ID may be found according to the triple information, so as to recognize the protocol. However, in the prior art, the association recognition table does not exist, and the protocol recognition can only be performed on the whole packet, so that the protocol recognition task cannot be completed since the content of the packet is encrypted.

### Embodiment 4

Embodiment 4 of the present invention provides an association protocol recognition method, to increase a protocol recognition speed.

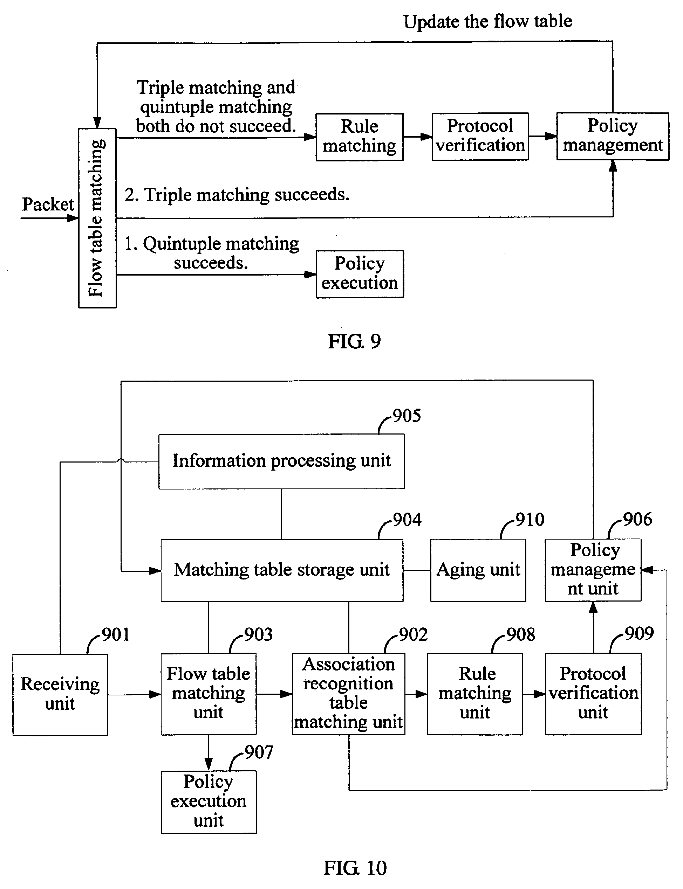

Referring to FIG. 9, in the embodiment of the present invention, information in an association recognition table is not stored alone, but is stored with a flow table and is matched in the form of a matching table. At this time, a longest matching method is adopted for matching.

When a packet is received, quintuple information matching is first performed in the flow table; and if the matching succeeds, policy execution is performed.

When the quintuple information matching does not succeed, triple information matching is performed in the flow table; and if the triple information matching succeeds, policy management is performed.

If the quintuple information matching and the triple information matching both do not succeed, protocol recognition is performed through steps such as rule matching and protocol verification.

In the embodiment of the present invention, the flow table includes triple information and a protocol ID corresponding to the triple information. For a method for acquiring the triple information and the protocol ID and a method for configuring the flow table, reference may be made to relevant steps in Embodiment 3, and the details will be not described herein again.

In the embodiment of the present invention, the triple information corresponding to a protocol is created in a process that a data channel of a data flow is created through a control channel, and the quintuple information is first matched in a matching process. If the matching does not succeed, the triple information is then matched. When the triple information matching succeeds, the policy management is performed without processes such as the rule matching and the protocol verification, thereby increasing the processing speed of the protocol recognition. When flow table matching is performed by using hardware such as the NP, the FPGA, or the ASIC, the processing efficiency can be improved to a larger extent.

Another benefit of the embodiment of the present invention is that, the rule matching does not need to be performed when the triple matching does not succeed, so the space for storing rules is saved.

Moreover, the triple information is established in a process of creating the data channel, so the content of the packet does not need to be checked. In this way, even if the content of the packet is encrypted, the packet can still be detected.

### Embodiment 5

Embodiment 5 of the present invention provides an association protocol recognition device, to increase a processing speed of protocol recognition. Referring to FIG. 10, the device includes a receiving unit 901 and an association recognition table matching unit 902.

The receiving unit 901 is adapted to receive a packet.

The association recognition table matching unit 902 is adapted to perform association recognition table matching between first match information in the packet received by the receiving unit and first match information in an association recognition table, where the first match information in the association recognition table is obtained by extracting a content of a control packet used for creating a data channel, the first match information corresponds to a packet protocol, and the packet protocol is obtained by performing protocol recognition on the control packet; and when the association recognition table matching succeeds, output protocol information obtained after the association recognition table matching succeeds.

In the embodiment of the present invention, the device further includes a flow table matching unit 903.

The flow table matching unit 903 is adapted to perform flow table matching on the received packet before the association recognition table matching is performed, where the flow table matching includes matching second match information in the packet with second match information in a flow table, and the second match information is used to search for relevant information, including an execution policy corresponding to the packet, in a data flow corresponding to the packet.

The first match information includes a Type, a SIP, and a SPort, or the first match information includes a Type, a DIP, and a DPort. The second match information includes the Type, the SIP, the SPort, the DIP, and the DPort. It should be noted that, the relevant information is not determined uniquely, and can be added or deleted according to information required by actual protocol matching.

In the embodiment of the present invention, the device further includes a matching table storage unit 904.

The matching table storage unit 904 is adapted to store the association recognition table and the flow table.

The flow table and the association recognition table may be located in different matching tables, that is, exist in the form of two separate tables; or the association recognition table and the flow table are located in the same matching table, and data of the two tables exists in the same table. In actual application, the matching table storage unit 904 may be implemented by using a physical storage medium (for example, a memory, a hard disk, or various storages) or multiple physical storage media, and storage locations of the flow table and the association recognition table are not limited on the storage media. Meanwhile, in software implementation, storage information can be defined as one storage structure (for example, the flow table) for storing the data in the flow table and the association recognition table, or defined as multiple storage structures (for example, in the form of the flow table + the association recognition table) for storage. Specifically, the flow table and the association recognition table may be implemented by a Hash table or a TCAM table or other tables having similar functions. In the embodiment of the present invention, a flow table storage unit and an association recognition table storage unit are not strictly distinguished from each other, and may be two units or integrated into one unit (for example, it can be considered that the flow table storage unit includes the association recognition table storage unit, that is, the flow table storage unit may implement functions of the association recognition table storage unit), which depends on the specific implementation manner.

When the association recognition table and the flow table are located in different matching tables, a full matching method is adopted to perform the flow table matching and the association recognition table matching; and when the association recognition table and the flow table are located in the same matching table, a longest matching method is adopted to perform the flow table matching and the association recognition table matching.

In the embodiment of the present invention, the device further includes an information processing unit 905.

The information processing unit 905 is adapted to extract the first match information in the control packet to the matching table storage unit when the control packet creates the data channel. The information processing unit is further adapted to configure the flow table or the association recognition table according to a type of the received packet, which includes updating the second match information in the flow table or the first match information in the association recognition table. For specific extraction and configuration processes, reference may be made to relevant steps in the method embodiment. The details will not be described herein again.

In the embodiment of the present invention, the device further includes a policy management unit 906, a policy execution unit 907, a rule matching unit 908, a protocol verification unit 909, and an aging unit 910.

The policy management unit 906 is adapted to perform policy management according to the output protocol information when the association recognition table matching succeeds, and update the flow table or the association recognition table according to a policy management result.

The policy execution unit 907 is adapted to execute a corresponding policy on the successfully matched packet after the flow table matching succeeds.

The rule matching unit 908 is adapted to perform rule matching on the received packet when the association recognition table matching does not succeed.

The protocol verification unit 909 is adapted to perform protocol verification on the packet processed by the rule matching unit, and send a protocol verification result to the policy management unit.

The aging unit 910 is adapted to delete relevant information in the flow table and/or relevant information in the association recognition table stored in the matching table storage unit, when it is monitored that no packet enters the data channel or a control channel within a period of time.

For specific processes of the units, reference may also be made to the relevant steps in the method embodiment. The details will not be described herein again.

In the embodiment of the present invention, the units may be specifically implemented through a general purpose processor or a dedicated processor or hardware having processing functions. Each unit may be implemented through one processor, or several units are implemented through the same processor. The specific implementation process is not limited. For example, in the embodiment of the present invention, the functions such as the flow table matching and the association recognition table matching may be implemented by adopting the processor such as the NP, the FPGA, or the ASIC.

When the NP, the FPGA, or the ASIC is adopted for matching, the processing speed is fast since hardware is used for implementation. When the quintuple information of the data channel is not matched successfully, the triple information is matched. If the triple information is matched successfully, the policy management is performed, thereby omitting the two steps of rule matching and protocol verification in the prior art and greatly improving the processing efficiency.

Another benefit of the embodiment of the present invention is that, if the protocol can be recognized through the association recognition table, the rule matching and the protocol verification processing modules are not needed. In the rule matching, a lot of rules need to be used, so a lot of space is needed to store the rules. In the embodiment of the present invention, the rule matching is not needed, so the space for storing the rules can be saved in the matching acceleration process.

Moreover, when a data packet having a encrypted content (for example, Layer 7 information of an IP packet) arrives (the triple information can still be detected), the triple information in the data packet and the protocol ID are already completed when the data channel is created, so the corresponding protocol ID may be found according to the triple information, to recognize the protocol. However, in the prior art, the association recognition table does not exist, and the protocol recognition can only be performed on the whole packet, so that the protocol recognition task cannot be completed since the content of the packet is encrypted.

Persons of ordinary skill in the art should understand that, all or a part of processes in the method according to the embodiments may be accomplished by relevant hardware instructing a computer program. The program may be stored in a computer-readable storage medium. When the program runs, the process of the method according to the embodiments of the present invention is performed. The storage medium may be a magnetic disk, an optical disk, a read-only memory (ROM), or a random access memory (RAM).

In the exemplary embodiments, the objectives, technical solutions, and advantages of the present invention are further illustrated in detail. It should be understood that, the above descriptions are merely exemplary embodiments of the present invention, but not intended to limit the present invention. Any modification, equivalent replacement, or improvement made without departing from the principle of the present invention shall fall within the protection scope of the present invention.

## Claims

1. A method for detecting a packet, comprising:
performing flow table matching on a received packet, wherein the flow table matching comprises matching second match information in the packet with second match information in a flow table, and the second match information is used to search for relevant information, comprising an execution policy corresponding to the packet, in a flow corresponding to the packet;
the method is **characterized in that**:
if the flow table matching does not succeed, performing association recognition table matching between first match information in the received packet and first match information in an association recognition table, wherein the first match information in the association recognition table is obtained by extracting a content of a control packet used for creating a data channel, the first match information corresponds to a packet protocol, and the packet protocol is obtained by performing protocol recognition on the control packet; and
when the association recognition table matching succeeds, outputting protocol information obtained after the association recognition table matching succeeds;
wherein
the first match information comprises a Type, a source Internet Protocol, IP, address, SIP, and a source port, SPort, or the first match information comprises a Type, a destination IP address, DIP, and a destination port, DPort; and
the second match information comprises the Type, the SIP, the SPort, the DIP, and the DPort.

2. The method for detecting a packet according to claim 1, wherein
the association recognition table and the flow table are located in different matching tables; or
the association recognition table and the flow table are located in the same matching table.

3. The method for detecting a packet according to claim 2, further comprising:
configuring the flow table or the association recognition table according to a type of the received packet, which comprises updating the second match information in the flow table or the first match information in the association recognition table.

4. The method for detecting a packet according to claim 1, further comprising:
when the flow table matching performed on the packet succeeds, executing a corresponding policy on the successfully matched packet; and
when the association recognition table matching succeeds, performing policy management on the packet according to the output protocol information obtained after the association recognition table matching succeeds, and updating the flow table according to a policy management result.

5. The method for detecting a packet according to claim 1, further comprising:
when the association recognition table matching performed on the packet does not succeed, performing the protocol recognition on the packet, wherein the protocol recognition comprises rule matching and protocol verification.

6. The method for detecting a packet according to claim 2, further comprising:
if it is monitored that no packet enters the data channel or a control channel within a period of time, deleting relevant information in the flow table and/or relevant information in the association recognition table.

7. A device for detecting a packet, comprising:
a receiving unit, adapted to receive a packet; and
a flow table matching unit, adapted to perform flow table matching on the received packet before the association recognition table matching is performed, wherein the flow table matching comprises matching second match information in the packet with second match information in a flow table, and the second match information is used to search for relevant information, comprising an execution policy corresponding to the packet, in a flow corresponding to the packet;
**characterized by**
an association recognition table matching unit, adapted to perform association recognition table matching between first match information in the packet received by the receiving unit and first match information in an association recognition table, wherein the first match information in the association recognition table is obtained by extracting a content of a control packet used for creating a data channel, the first match information corresponds to a packet protocol, and the packet protocol is obtained by performing protocol recognition on the control packet; and when the association recognition table matching succeeds, output protocol information obtained after the association recognition table matching succeeds;
wherein
the first match information comprises a Type, a source Internet Protocol, IP, address, SIP, and a source port, SPort, or the first match information comprises a Type, a destination IP address, DIP, and a destination port, DPort; and
the second match information comprises the Type, the SIP, the SPort, the DIP, and the DPort.

8. The device for detecting a packet according to claim 7, further comprising:
a matching table storage unit, adapted to store the association recognition table and the flow table, wherein
the association recognition table and the flow table are located in different matching tables; or the association recognition table and the flow table are located in the same matching table.

9. The device for detecting a packet according to claim 8, further comprising:
an information processing unit, adapted to extract the first match information in the control packet to the matching table storage unit when the control packet creates the data channel, wherein
the information processing unit is further adapted to configure the flow table or the association recognition table according to a type of the received packet, which comprises updating the second match information in the flow table or the first match information in the association recognition table.

10. The device for detecting a packet according to claim 7, further comprising:
a policy management unit, adapted to perform policy management according to the output protocol information when the association recognition table matching succeeds, and update the flow table or the association recognition table according to a policy management result.

11. The device for detecting a packet according to claim 7, further comprising:
a policy execution unit, adapted to execute a corresponding policy on the successfully matched packet after the flow table matching succeeds.

12. The device for detecting a packet according to claim 10, further comprising:
a rule matching unit, adapted to perform rule matching on the received packet when the association recognition table matching does not succeed; and
a protocol verification unit, adapted to perform protocol verification on the packet processed by the rule matching unit, and send a protocol verification result to the policy management unit.

13. The device for detecting a packet according to claim 8, further comprising:
an aging unit, adapted to delete relevant information in the flow table and/or relevant information in the association recognition table stored in the matching table storage unit, when it is monitored that no packet enters the data channel or a control channel within a period of time.

## Patentansprüche

1. Verfahren zum Detektieren eines Pakets, das Folgendes umfasst:
Durchführen von Flusstabellenabgleichen an einem empfangenen Paket, wobei das Flusstabellenabgleichen das Abgleichen zweiter Abgleichinformationen in dem Paket mit zweiten Abgleichinformationen in einer Flusstabelle umfasst, und wobei die zweiten Abgleichinformationen dazu verwendet werden, in einem dem Paket entsprechenden Fluss nach relevanten Informationen zu suchen, die eine Ausführungsvorschrift umfassen, die dem Paket entspricht;
wobei das Verfahren durch das Folgende gekennzeichnet ist:
falls das Flusstabellenabgleichen nicht erfolgreich ist, Durchführen von Assoziationserkennungstabellenabgleichen zwischen ersten Abgleichinformationen in dem empfangenen Paket und ersten Abgleichinformationen in einer Assoziationserkennungstabelle, wobei die ersten Abgleichinformationen in der Assoziationserkennungstabelle durch Extrahieren eines Inhalts eines Steuerungspakets, das zum Schaffen eines Datenkanals verwendet wird, erhalten werden, wobei die ersten Abgleichinformationen einem Paketprotokoll entsprechen und das Paketprotokoll durch Durchführen von Protokollerkennung an dem Steuerungspaket erhalten wird; und
wenn das Assoziationserkennungstabellenabgleichen erfolgreich ist, Ausgeben von Protokollinformationen, die erhalten werden, nachdem das Assoziationserkennungstabellenabgleichen erfolgreich war;
wobei
die ersten Abgleichinformationen einen Typ, eine Quell-Internet-Protokoll-Adresse oder auch Quell-IP-Adresse oder SIP und einen Quellanschluss, SPort, umfassen oder die ersten Abgleichinformationen einen Typ, eine Ziel-IP-Adresse, DIP, und einen Ziel-Anschluss, DPort, umfassen; und
die zweiten Abgleichinformationen den Typ, das SIP, den SPort, das DIP und den DPort umfassen.

2. Verfahren zum Detektieren eines Pakets nach Anspruch 1, wobei sich die Assoziationserkennungstabelle und die Flusstabelle in verschiedenen Abgleichtabellen befinden;
oder
sich die Assoziationserkennungstabelle und die Flusstabelle in derselben Abgleichtabelle befinden.

3. Verfahren zum Detektieren eines Pakets nach Anspruch 2, das ferner Folgendes umfasst:
Konfigurieren der Flusstabelle oder der Assoziationserkennungstabelle gemäß einem Typ des empfangenen Pakets, was das Aktualisieren der zweiten Abgleichinformationen in der Flusstabelle oder der ersten Abgleichinformationen in der Assoziationserkennungstabelle umfasst.

4. Verfahren zum Detektieren eines Pakets nach Anspruch 1, das ferner Folgendes umfasst:
wenn das an dem Paket durchgeführte Flusstabellenabgleichen erfolgreich ist, Ausführen einer entsprechenden Vorschrift an dem erfolgreich abgeglichenen Paket; und
wenn das Assoziationserkennungstabellenabgleichen erfolgreich ist, Durchführen von Vorschriftsmanagement an dem Paket gemäß den Ausgabeprotokollinformationen, die erhalten werden, nachdem das Assoziationserkennungstabellenabgleichen erfolgreich war, und Aktualisieren der Flusstabelle gemäß einem Vorschriftsmanagementergebnis.

5. Verfahren zum Detektieren eines Pakets nach Anspruch 1, das ferner Folgendes umfasst:
wenn das an dem Paket durchgeführte Assoziationserkennungstabellenabgleichen nicht erfolgreich ist, Durchführen der Protokollerkennung an dem Paket, wobei die Protokollerkennung Regelabgleich und Protokollverifikation umfasst.

6. Verfahren zum Detektieren eines Pakets nach Anspruch 2, das ferner Folgendes umfasst:
falls entdeckt wird, dass kein Paket innerhalb einer Zeitdauer in den Datenkanal oder einen Steuerkanal eintritt, Löschen relevanter Informationen in der Flusstabelle und/oder relevanter Informationen in der Assoziationserkennungstabelle.

7. Vorrichtung zum Detektieren eines Pakets, das Folgendes umfasst:
eine Empfangseinheit, die ausgelegt ist zum Empfangen eines Pakets; und
eine Flusstabellenabgleicheinheit, die ausgelegt ist zum Durchführen von Flusstabellenabgleichen an dem empfangenen Paket, bevor das Assoziationserkennungstabellenabgleichen durchgeführt wird, wobei das Flusstabellenabgleichen das Abgleichen zweiter Abgleichinformationen in dem Paket mit zweiten Abgleichinformationen in einer Flusstabelle umfasst, und wobei die zweiten Abgleichinformationen dazu verwendet werden, in einem dem Paket entsprechenden Fluss nach relevanten Informationen zu suchen, die eine Ausführungsvorschrift umfassen, die dem Paket entspricht;
**gekennzeichnet durch**
eine Assoziationserkennungstabellenabgleicheinheit, die ausgelegt ist zum Durchführen von Assoziationserkennungstabellenabgleichen zwischen ersten Abgleichinformationen in dem von der Empfangseinheit empfangenen Paket und ersten Abgleichinformationen in einer Assoziationserkennungstabelle, wobei die ersten Abgleichinformationen in der Assoziationserkennungstabelle **durch** Extrahieren eines Inhalts eines Steuerungspakets, das zum Schaffen eines Datenkanals verwendet wird, erhalten werden, wobei die ersten Abgleichinformationen einem Paketprotokoll entsprechen und das Paketprotokoll durch Durchführen von Protokollerkennung an dem Steuerungspaket erhalten wird; und wenn das Assoziationserkennungstabellenabgleichen erfolgreich ist, Ausgeben von Protokollinformationen, die erhalten werden, nachdem das Assoziationserkennungstabellenabgleichen erfolgreich war;
wobei
die ersten Abgleichinformationen einen Typ, eine Quell-Internet-Protokoll-Adresse oder auch Quell-IP-Adresse oder SIP und einen Quellanschluss, SPort, umfassen oder die ersten Abgleichinformationen einen Typ, eine Ziel-IP-Adresse, DIP, und einen Ziel-Anschluss, DPort, umfassen; und
die zweiten Abgleichinformationen den Typ, das SIP, den SPort, das DIP und den DPort umfassen.

8. Vorrichtung zum Detektieren eines Pakets nach Anspruch 7, das ferner Folgendes umfasst:
eine Abgleichtabellenspeichereinheit, die ausgelegt ist zum Speichern der Assoziationserkennungstabelle und der Flusstabelle, wobei
sich die Assoziationserkennungstabelle und die Flusstabelle in verschiedenen Abgleichtabellen befinden; oder sich die Assoziationserkennungstabelle und die Flusstabelle in derselben Abgleichtabelle befinden.

9. Vorrichtung zum Detektieren eines Pakets nach Anspruch 8, das ferner Folgendes umfasst:
eine Informationsverarbeitungseinheit, die ausgelegt ist zum Extrahieren der ersten Abgleichinformationen in dem Steuerungspaket zu der Abgleichtabellenspeichereinheit, wenn das Steuerungspaket den Datenkanal erschafft, wobei
die Informationsverarbeitungseinheit ferner ausgelegt ist zum Konfigurieren der Flusstabelle oder der Assoziationserkennungstabelle gemäß einem Typ des empfangenen Pakets, was das Aktualisieren der zweiten Abgleichinformationen in der Flusstabelle oder der ersten Abgleichinformationen in der Assoziationserkennungstabelle umfasst.

10. Vorrichtung zum Detektieren eines Pakets nach Anspruch 7, das ferner Folgendes umfasst:
eine Vorschriftsmanagementeinheit, die ausgelegt ist zum Durchführen von Vorschriftsmanagement gemäß den Ausgabeprotokollinformationen, wenn das Assoziationserkennungstabellenabgleichen erfolgreich ist, und zum Aktualisieren der Flusstabelle oder der Assoziationserkennungstabelle gemäß einem Vorschriftsmanagementergebnis.

11. Vorrichtung zum Detektieren eines Pakets nach Anspruch 7, das ferner Folgendes umfasst:
eine Vorschriftsausführungseinheit, die ausgelegt ist zum Ausführen einer entsprechenden Vorschrift an dem erfolgreich abgeglichenen Paket, nachdem das Flusstabellenabgleichen erfolgreich war.

12. Vorrichtung zum Detektieren eines Pakets nach Anspruch 10, das ferner Folgendes umfasst:
eine Regelabgleicheinheit, die ausgelegt ist zum Durchführen von Regelabgleichen an dem empfangenen Paket, wenn das Assoziationserkennungstabellenabgleichen nicht erfolgreich ist; und
eine Protokollverifikationseinheit, die ausgelegt ist zum Durchführen von Protokollverifikation an dem von der Regelabgleicheinheit verarbeiteten Paket und zum Senden eines Protokollverifikationsergebnisses an die Vorschriftsmanagementeinheit.

13. Vorrichtung zum Detektieren eines Pakets nach Anspruch 8, das ferner Folgendes umfasst:
eine Alterseinheit, die ausgelegt ist zum Löschen relevanter Informationen in der Flusstabelle und/oder relevanter Informationen in der Assoziationserkennungstabelle die in der Abgleichtabellenspeichereinheit gespeichert sind, wenn entdeckt wird, dass innerhalb einer Zeitdauer kein Paket in den Datenkanal oder einen Steuerungskanal eintritt.

## Revendications

1. Procédé de détection d'un paquet, comprenant :
l'exécution d'une mise en correspondance de table de flux sur un paquet reçu, dans lequel la mise en correspondance de table de flux comprend la mise en correspondance de secondes informations de mise en correspondance dans le paquet avec des secondes informations de mise en correspondance dans une table de flux, et les secondes informations de mise en correspondance sont utilisées pour rechercher des informations pertinentes, dont une stratégie d'exécution correspondant au paquet, dans un flux correspondant au paquet ;
le procédé étant **caractérisé par** :
si la mise en correspondance de table de flux échoue, l'exécution d'une mise en correspondance de table de reconnaissance d'associations entre des premières informations de mise en correspondance dans le paquet reçu et des premières informations de mise en correspondance dans une table de reconnaissance d'associations, dans lequel les premières informations de mise en correspondance dans la table de reconnaissance d'associations sont obtenues en extrayant un contenu d'un paquet de commande utilisé pour créer un canal de données, les premières informations de mise en correspondance correspondent à un protocole de paquet, et le protocole de paquet est obtenu en exécutant une reconnaissance de protocole sur le paquet de commande ; et
quand la mise en correspondance de table de reconnaissance d'associations réussit, la production en sortie d'informations de protocole obtenues après que la mise en correspondance de table de reconnaissance d'associations réussit ;
dans lequel :
les premières informations de mise en correspondance comprennent un Type, une adresse de Protocole Internet, IP, source, SIP, et un port source, SPort, ou les premières informations de mise en correspondance comprennent un Type, une adresse IP destinataire, DIP, et un port destinataire, DPort ; et
les secondes informations de mise en correspondance comprennent le Type, la SIP, le SPort, la DIP et le DPort.

2. Procédé de détection d'un paquet selon la revendication 1, dans lequel
la table de reconnaissance d'associations et la table de flux sont situées dans des tables de mise en correspondance différentes ; ou
la table de reconnaissance d'associations et la table de flux sont situées dans la même table de mise en correspondance.

3. Procédé de détection d'un paquet selon la revendication 2, comprenant en outre :
la configuration de la table de flux ou de la table de reconnaissance d'associations en fonction d'un type du paquet reçu, laquelle comprend l'actualisation des secondes informations de mise en correspondance dans la table de flux ou des premières informations de mise en correspondance dans la table de reconnaissance d'associations.

4. Procédé de détection d'un paquet selon la revendication 1, comprenant en outre :
quand la mise en correspondance de table de flux exécutée sur le paquet réussit, l'exécution d'une stratégie correspondante sur le paquet sur lequel la mise en correspondance à réussi ; et
quand la mise en correspondance de table de reconnaissance d'associations réussit, l'exécution d'une gestion de stratégie sur le paquet en fonction des informations de protocole de sortie obtenues après que la mise en correspondance de table de reconnaissance d'associations réussit, et l'actualisation de la table de flux en fonction d'un résultat de gestion de stratégie.

5. Procédé de détection d'un paquet selon la revendication 1, comprenant en outre :
quand la mise en correspondance de table de reconnaissance d'associations échoue, l'exécution de la reconnaissance de protocole sur le paquet, la reconnaissance de protocole comprenant une mise en correspondance de règle et une vérification de protocole.

6. Procédé de détection d'un paquet selon la revendication 2, comprenant en outre :
s'il est constaté qu'aucun paquet n'est entré dans le canal de données ou un canal de commande au terme d'une période de temps, la suppression d'informations pertinentes dans la table de flux et/ou d'informations pertinentes dans la table de reconnaissance d'associations.

7. Dispositif de détection d'un paquet, comprenant :
une unité de réception, adaptée pour recevoir un paquet ; et
une unité de mise en correspondance de table de flux, adaptée pour exécuter une mise en correspondance de table de flux sur le paquet reçu avant l'exécution de la mise en correspondance de table de reconnaissance d'associations, la mise en correspondance de table de flux comprenant la mise en correspondance de secondes informations de mise en correspondance dans le paquet avec des secondes informations de mise en correspondance dans une table de flux, et les secondes informations de mise en correspondance étant utilisées pour rechercher des informations pertinentes, dont une stratégie d'exécution correspondant au paquet, dans un flux correspondant au paquet ;
**caractérisé par** :
une unité de mise en correspondance de table de reconnaissance d'associations, adaptée pour exécuter une mise en correspondance de table de reconnaissance d'associations entre des premières informations de mise en correspondance dans le paquet reçu par l'unité de réception et des premières informations de mise en correspondance dans une table de reconnaissance d'associations, dans lequel les premières informations de mise en correspondance dans la table de reconnaissance d'associations sont obtenues en extrayant un contenu d'un paquet de commande utilisé pour créer un canal de données, les premières informations de mise en correspondance correspondent à un protocole de paquet, et le protocole de paquet est obtenu en exécutant une reconnaissance de protocole sur le paquet de commande ; et quand la mise en correspondance de table de reconnaissance d'associations réussit, produire en sortie des informations de protocole obtenues après que la mise en correspondance de table de reconnaissance d'associations réussit ; dans lequel :
les premières informations de mise en correspondance comprennent un Type, une adresse de Protocole Internet, IP, source, SIP, et un port source, SPort, ou les premières informations de mise en correspondance comprennent un Type, une adresse IP destinataire, DIP, et un port destinataire, DPort ; et
les secondes informations de mise en correspondance comprennent le Type, la SIP, le SPort, la DIP et le DPort.

8. Dispositif de détection d'un paquet selon la revendication 7, comprenant en outre :
une unité de mémorisation de table de mise en correspondance, adaptée pour mémoriser la table de reconnaissance d'associations et la table de flux, dans lequel la table de reconnaissance d'associations et la table de flux sont situées dans des tables de mise en correspondance différentes ; ou la table de reconnaissance d'associations et la table de flux sont situées dans la même table de mise en correspondance.

9. Dispositif de détection d'un paquet selon la revendication 8, comprenant en outre :
une unité de traitement d'informations, adaptée pour extraire les premières informations de mise en correspondance dans le paquet de commande allant à l'unité de mémorisation de tables de mise en correspondance quand le paquet de commande crée le canal de données, dans lequel
l'unité de traitement d'informations est adaptée en outre pour configurer la table de flux ou la table de reconnaissance d'associations en fonction d'un type du paquet reçu, ce qui comprend l'actualisation des secondes informations de mise en correspondance dans la table de flux ou des premières informations de mise en correspondance dans la table de reconnaissance d'associations.

10. Dispositif de détection d'un paquet selon la revendication 7, comprenant en outre :
une unité de gestion de stratégie, adaptée pour exécuter une gestion de stratégie en fonction des informations de protocole de sortie quand la mise en correspondance de table de reconnaissance d'associations réussit, et actualiser la table de flux ou la table de reconnaissance d'associations en fonction d'un résultat de gestion de stratégie.

11. Dispositif de détection d'un paquet selon la revendication 7, comprenant en outre :
une unité d'exécution de stratégie, adaptée pour exécuter une stratégie correspondante sur le paquet sur lequel la mise en correspondance a réussi après que la mise en correspondance de table de flux réussit.

12. Dispositif de détection d'un paquet selon la revendication 10, comprenant en outre :
une unité de mise en correspondance de règle, adaptée pour effectuer une mise en correspondance de règle sur le paquet reçu quand la mise en correspondance de table de reconnaissance d'associations échoue ; et
une unité de vérification de protocole, adaptée pour effectuer une vérification de protocole sur le paquet traité par l'unité de mise en correspondance de règle, et envoyer un résultat de vérification de protocole à l'unité de gestion de stratégie.

13. Dispositif de détection d'un paquet selon la revendication 8, comprenant en outre :
une unité de suppression selon l'antériorité, adaptée pour supprimer des informations pertinentes dans la table de flux et/ou des informations pertinentes dans la table de reconnaissance d'associations mémorisée dans l'unité de mémorisation de table de mise en correspondance, quand il est constaté qu'aucun paquet n'est entré dans le canal de données ou un canal de commande au terme d'une période de temps.
